# EUROPEAN PATENT SPECIFICATION

(11) **EP 2 998 770 B1**
(45) Date of publication and mention of the grant of the patent: **23.10.2019**
(21) Application number: 15184042.8
(22) Date of filing: 07.09.2015
(51) Int. Cl.: G02B 6/32, G02B 6/38

(54) **OPTICAL CONNECTOR AND MANUFACTURING METHOD FOR OPTICAL CONNECTOR**
OPTISCHER STECKVERBINDER UND HERSTELLUNGSVERFAHREN FÜR EINEN OPTISCHEN STECKVERBINDER
CONNECTEUR OPTIQUE ET PROCÉDÉ DE FABRICATION D'UN CONNECTEUR OPTIQUE

(30) Priority: 11.09.2014 JP 2014185536
(43) Date of publication of application: 23.03.2016
(73) Proprietor: Sumitomo Electric Industries, Ltd., Osaka-shi, Osaka 541-0041 (JP)
(72) Inventor: ARAO, Hajime, Kanagawa 244-8588 (JP); SANO, Tomomi, Kanagawa 244-8588 (JP); SASAKI, Dai, Kanagawa 244-8588 (JP)
(74) Representative: Hoffmann Eitle

(56) References cited:
- JP-A- 2013 101 312
- US-A- 5 838 852
- US-A- 5 926 593
- US-B1- 8 757 893

## Description

### BACKGROUND OF THE INVENTION

### Field of the Invention

The present invention relates to an optical connector and a manufacturing method for an optical connector.

### Related Background Art

There is an optical connector formed by housing a plurality of optical fibers in a ferrule. In the case of mutually the connecting optical connectors, positioning among the optical fibers is performed by, for example, a guide pin. As an optical connector of this kind, there is an optical connector including a lens to magnify a beam at each of end portions of the optical fibers in order to mitigate positioning accuracy among the optical fibers, in which optical connection is performed via a magnified beam. This kind of optical connector is disclosed in Japanese Patent Application Laid-Open No. 2005-300596.

According to the optical connector disclosed in Japanese Patent Application Laid-Open No. 2005-300596, a Graded Index (GRIN) lens is disposed at each of end portions of optical fibers in each of holding holes for the optical fibers at a ferrule, and optical connection is performed via a beam magnified at the GRIN lens.

### SUMMARY OF THE INVENTION

By the way, in a form of performing optical connection via a magnified beam, there may be a case where optical connection is performed in a state that an end surface of an optical connector on one side is made to face an end surface of an optical connector on the other side while keeping a space therebetween. In this case, when an incidence/emission plane at the end surface of the optical connector is orthogonal to optical axes of optical fibers and GRIN lenses like Japanese Patent Application Laid-Open No. 2005-300596, reflected return light reflected at the incidence/emission plane of the end surface on one side and at the incidence/emission plane of the end surface of the optical connector on the other side is connected to the optical fiber, thereby deteriorating optical characteristics.

Documents US5838852 and US5926593 both disclose optical connectors having waveguides and GRIN lenses having an offset between the optical axes of the GIN lenses and the waveguides.

Documents US8757893 and JP2013-101312 disclose optical connectors having GRIN lenses and waveguides with co-linear optical axes arranged in ferrules.

Therefore, the present invention is directed to providing an optical connector and a manufacturing method for an optical connector capable of suppressing deterioration of the optical characteristics caused by the reflected return light at the incidence/emission planes.

An optical connector according to the present invention is defined by claim 1 as an optical connector including a plurality of light incidence/emission portions and a ferrule to house the plurality of light incidence/emission portions, and configured to perform optical connection to an optical connector on the other side. Each of the plurality of light incidence/emission portions includes: a waveguide member having a first optical axis; and a GRIN lens including a second optical axis and having an end connected to an end portion of the waveguide member and the other end provided with an incidence/emission plane. The second optical axis is offset relative to the first optical axis at the end portion of the waveguide member, the incidence/emission plane is not orthogonal to an optical axis of an optical beam emitted from the incidence/emission plane, and also not orthogonal to an optical axis of an optical beam entering the incidence/emission plane, and the ferrule includes a guide portion to perform optical connection to the optical connector on the other side.

Further, a manufacturing method for an optical connector according to the present invention is defined by claim 12 as the manufacturing method for the optical connector which includes a plurality of light incidence/emission portions and a ferrule to house the plurality of light incidence/emission portions and is configured to perform optical connection to an optical connector on the other side. The manufacturing method includes: a first step of preparing an optical connector ferrule and a jig ferrule, in which the optical connector ferrule includes a front end facing the optical connector on the other side and a rear end on an opposite side of the front end, has an introducing hole opened at the rear end and configured to introduce waveguide members of the plurality of light incidence/emission portions, has a plurality of first holes opened at the front end and configured to respectively house GRIN lenses of the plurality of light incidence/emission portions, and has a plurality of second holes formed on the introducing hole side of the plurality of first holes, each of the second holes having a diameter smaller than a diameter of the first hole, configured to respectively connect the plurality of first holes to the introducing hole, and configured to respectively house the waveguide members introduced from the introducing hole, and the jig ferrule is configured to respectively guide the GRIN lenses into the plurality of first holes; a second step of the jig ferrule protruding and guiding tips of the GRIN lenses reflectively; a third step of respectively inserting the waveguide members into the plurality of second holes of the optical connector ferrule, and also respectively inserting, from the front end side, the tips of the GRIN lenses protruded from the jig ferrule into the plurality of first holes of the optical connector ferrule; a fourth step of making the tips of the GRIN lenses abut against tips of the waveguide members respectively, and also making the tips of the GRIN lenses abut against a portion where a diameter is reduced from the first hole to the second hole; a fifth step of respectively bending the waveguide members on the rear end side of the optical connector ferrule and the GRIN lenses on the rear end side of the jig ferrule; a sixth step of confirming bending of the waveguide members and bending of the GRIN lenses, and then fixing the waveguide members and the GRIN lenses to the optical connector ferrule; and a seventh step of polishing the front end.

According to the present invention, deterioration optical characteristics caused by reflected return light at an incidence/emission plane can be prevented.

### BRIEF DESCRIPTION OF THE DRAWINGS

FIG. 1 is a perspective view illustrating an optical connector according to a first embodiment of the present invention;
FIG. 2 is a cross-sectional view of the optical connector taken along a line II-II line in FIG. 1;
FIG 3 is an enlarged view of a portion III illustrated in FIG. 2;
FIG. 4 is a cross-sectional perspective view illustrating a ferrule taken along the line II-II in FIG 2 and also a partial enlarged cross-sectional perspective view thereof;
FIG 5 is a diagram schematically illustrating a connection state (optical connection state) at a light incidence/emission portion according to a first embodiment;
FIGS. 6A to 6C are diagrams schematically illustrating connection states (optical connection states) of the optical connector according to the first embodiment of the present invention;
FIG. 7 is a diagram illustrating a relation of return loss relative to an offset amount between an optical axis L1 of an optical fiber 11 and an optical axis L2 of a GRIN lens 12;
FIG. 8 is a flowchart illustrating a manufacturing method for an optical connector according to an embodiment of the present invention;
FIG 9 is a schematic view illustrating the manufacturing method for the optical connector illustrated in FIG. 8;
FIG. 10 is a perspective view illustrating an optical connector according to a second embodiment of the present invention;
FIG. 11 is a cross-sectional view of the optical connector taken along a line XI-XI illustrated in FIG 10;
FIG. 12 is an enlarged view of a portion XII illustrated in FIG 11;
FIG 13 is a partial enlarged cross-sectional view (schematic view) of a light incidence/emission portion taken along a line XI-XI in FIG 10;
FIG 14 is a partial enlarged cross-sectional perspective view of a ferrule taken along the line XI-XI in FIG 10;
FIG. 15 is a diagram schematically illustrating a connection state (optical connection state) of the light incidence/emission portion according to the second embodiment;
FIGS. 16A to 16C are diagrams schematically illustrating the connection states (optical connection states) of the optical connector according to the second embodiment of the present invention;
FIG. 17 is a perspective view illustrating an optical connector according to a third embodiment of the present invention;
FIG 18 is a diagram schematically illustrating a connection state (optical connection state) of a light incidence/emission portion according to the third embodiment; and
FIGS. 19A to 19C are diagrams schematically illustrating the connection states (optical connection states) of the optical connector according to the third embodiment of the present invention.

### DESCRIPTION OF THE PREFERRED EMBODIMENTS

### [Description of embodiments of the present invention]

First, contents of embodiments of the present invention will be listed up and described. An optical connector according to an embodiment of the present invention is an optical connector (1) including a plurality of light incidence/emission portions and a ferrule to house the plurality of light incidence/emission portions, and configured to perform optical connection to an optical connector on the other side. Each of the plurality of light incidence/emission portions includes: a waveguide member having a first optical axis; and a GRIN lens including a second optical axis, and having one end connected to an end portion of the waveguide member and the other end provided with an incidence/emission plane. The second optical axis is offset relative to the first optical axis at the end portion of the waveguide member, the incidence/emission plane is not orthogonal to an optical axis of an optical beam emitted from the incidence/emission plane, and also not orthogonal to an optical axis of an optical beam entering the incidence/emission plane, and the ferrule includes a guide portion to perform optical connection to the optical connector on the other side.

According to this optical connector, an optical axis of an optical beam entering the GRIN lens from the waveguide member can be made different from the optical axis of the GRIN lens by offsetting the optical axis of the GRIN lens relative to the optical axis of the waveguide member. By this, the optical axis of the optical beam emitted from the incidence/emission plane can be easily prevented from being orthogonal to the incidence/emission plane. Therefore, the light reflected at the incidence/emission plane (the other end surface of the GRIN lens) can be suppressed from being connected to a waveguide of the waveguide member, and deterioration of optical characteristics caused by reflected return light at the incidence/emission plane can be reduced.

Further, according to this optical connector, when the optical beam having the optical axis not orthogonal to the incidence/emission plane enters the incidence/emission plane, the optical beam can be easily connected to the waveguide of the waveguide member.
(2) The above-described waveguide member may be a member configured to perform single-mode transmission, and an offset amount of the second optical axis relative to the first optical axis may be 5 µm or more. With this structure, return loss can be sufficiently suppressed at the incidence/emission plane in the case of single-mode transmission, and application to the optical connector for single-mode transmission becomes possible.
(3) An outer diameter of the above-described GRIN lens may be larger than an outer diameter of the waveguide member. With this structure, the optical beam emitted from the waveguide member is hardly deviated from the GRIN lens even when the optical axis of the GRIN lens is offset relative to the optical axis of the waveguide member. Further, when the optical connector is assembled, positions of the end surfaces of the waveguide member and the GRIN lens can be easily controlled by changing a size of a hole to house the waveguide member and a size of the hole to house the GRIN lens. In other words, a length of the GRIN lens can be easily controlled. Therefore, good optical characteristics can be obtained.
(4) An outer periphery of the above-described waveguide member may be contained inside an outer periphery of the GRIN lens. With this structure, the end surface of the waveguide member can be made to sufficiently abut against the end surface of the GRIN lens in the case of determining a position of the waveguide member by abutting the waveguide member against the GRIN lens after the GRIN lens is fixed to the ferrule. By this, the waveguide member and GRIN lens can be suppressed from being damaged in an assembly process.
(5) The above-described incidence/emission plane may be orthogonal to the second optical axis. With this structure, the end surface of the GRIN lens and the end surface of the ferrule are not needed to be processed diagonally. Further, in the case of disposing the plurality of waveguide members having multiple cores and multiple stages, the positions of the end surfaces of the respective waveguide members and the positions of the end surface of the GRIN lens can be easily aligned. Moreover, variation of the length of the GRIN lens can be suppressed. Therefore, good optical characteristics can be obtained.
(6) The above-described the guide portions are disposed symmetrically relative to a symmetric line, and the plurality of the light incidence/emission portions may be disposed asymmetrically relative to the symmetric line such that optical connection of an optical beam having an optical axis not orthogonal to each of the incidence/emission planes is performed between the optical connector and the optical connector on the other side.
   In the case of performing optical connection between the optical connectors, the optical beam is inclined to a connecting direction between the optical connectors. Therefore, the light incidence/emission portion of the optical connector on one side is needed to be offset relative to the light incidence/emission portion of the optical connector on the other side so as to conform to the inclination. According to this optical connector, offsetting the above-mentioned light incidence/emission portion can be achieved by asymmetrically disposing the plurality of light incidence/emission portions, and optical connection of the optical beam having the optical axis not orthogonal to each of the incidence/emission planes can be easily performed between a pair of the optical connectors. With this structure, the above-described light incidence/emission portion can be applied to a multi-core optical connector.
(7) The optical connector on the other side has a structure same as the above-described optical connector. The above-described guide portion includes a first guide portion and a second guide portion connectable to the first guide portion, and when the optical connector is vertically inversed and faces the optical connector on the other side, the first guide portion may be connected to the second guide portion of the optical connector on the other side, and the second guide portion may be connected to the first guide portion of the optical connector on the other side. With this structure, the optical connectors having the same shape may be prepared and connected to each other by vertically inverting one of the optical connectors relative to the other without preparing two kinds of a male connector and a female connector. With this structure, cost reduction can be achieved.
(8) The above-described incidence/emission plane is not orthogonal to the second optical axis, and the second optical axis may be parallel to an optical axis of an optical beam emitted from incidence/emission plane and also parallel to an optical axis of an optical beam entering the incidence/emission plane. With this structure, the optical axis of the optical beam emitted from the incidence/emission plane and the optical axis of the optical beam entering the incidence/emission plane are parallel to the optical axis of the GRIN lens. Therefore, in the case of application to the optical connector, optical connection can be easily achieved just by making these optical connectors face each other without offsetting. Therefore, an easy-to-use light incidence/emission portions can be obtained. Further, with this structure, offset of the optical axis and inclination of the end surface are combined, and even when an inclination amount of the end surface is small, deterioration of the optical characteristics caused by reflected return light at the incidence/emission plane can be sufficiently suppressed. Therefore, good optical characteristics can be obtained.
(9) The above-described the guide portions are disposed symmetrically relative to a symmetric line, and the plurality of the light incidence/emission portions may be disposed symmetrically relative to the above-mentioned symmetric line such that optical connection of an optical beam having an optical axis not orthogonal to each of the incidence/emission planes is performed between the optical connector and the optical connector on the other side.
   In the case of performing optical connection between these optical connectors, the optical beam becomes parallel to a connecting direction between the optical connectors. Therefore, the light incidence/emission portion of the optical connector on one side is not needed to be offset relative to the light incidence/emission portion of the optical connector on the other side. According to this optical connector, optical connection of the optical beam having the optical axis not orthogonal to each of the incidence/emission planes can be easily performed between a pair of the optical connectors by symmetrically disposing the plurality of light incidence/emission portions. In other words, as described above, optical connection can be easily performed just by making these optical connectors face each other without offsetting. With this structure, the above-described light incidence/emission portion can be applied to a multi-core optical connector.
(10) The above-described guide portion includes a first guide portion and a second guide portion connectable to the first guide portion, and when the optical connector faces the optical connector on the other side, the first guide portion may be connected to the second guide portion of the optical connector on the other side, and the second guide portion may be connected to the first guide portion of the optical connector on the other side. With this structure, the optical connectors having the same shape may be prepared and connected to each other without preparing two kinds of a male connector and a female connector. Note that an embodiment of preparing the optical connectors having the same shape and connecting these optical connectors by vertically inverting one of the optical connectors relative to the other may be also adopted as described above. With this structure, cost reduction can be achieved.

The optical connector according to an embodiment of the present invention is (11) an optical connector including the above-described plurality of light incidence/emission portions and the ferrule to house the plurality of light incidence/emission portions, and configured to perform optical connection to an optical connector on the other side. In the optical connector, the ferrule includes a front end facing the optical connector on the other side, and a rear end on the opposite side of the front side. At the rear end, an introducing hole configured to introduce waveguide members of the plurality of light incidence/emission portions is opened, and at the front end, a plurality of first holes configured to respectively house GRIN lenses of the plurality of light incidence/emission portions is opened. A plurality of second holes each having a diameter smaller than a diameter of the first hole is formed on the introducing hole side of the plurality of first holes, configured to respectively connect the plurality of first holes to the introducing hole, and configured to respectively house the waveguide members introduced from the introducing hole.

According to this optical connector, the position of end surface of the GRIN lens having a large diameter and the length of the GRIN lens can be easily controlled by introducing the GRIN lens from the front end side and introducing the waveguide member from the rear end side when the optical connector is assembled. Therefore, good optical characteristics can be obtained.

A manufacturing method for an optical connector according to an embodiment of the present invention is (12) the manufacturing method for the optical connector which includes a plurality of light incidence/emission portions and a ferrule to house the plurality of light incidence/emission portions and is configured to perform optical connection to an optical connector on the other side. The manufacturing method includes: a first step of preparing an optical connector ferrule and a jig ferrule, in which the optical connector ferrule includes a front end facing the optical connector on the other side and a rear end on an opposite side of the front end, has an introducing hole opened at the rear end and configured to introduce waveguide members of the plurality of light incidence/emission portions, has a plurality of first holes opened at the front end and configured to respectively house GRIN lenses of the plurality of light incidence/emission portions, and has a plurality of second holes formed on the introducing hole side of the plurality of first holes, each of the second holes having a diameter smaller than a diameter of the first hole, configured to respectively connect the plurality of first holes to the introducing hole, and configured to respectively house the waveguide members introduced from the introducing hole, and the jig ferrule is configured to respectively guide the GRIN lenses into the plurality of first holes; a second step of the jig ferrule protruding and guiding tips of the GRIN lenses reflectively; a third step of respectively inserting the waveguide members into the plurality of second holes of the optical connector ferrule, and also respectively inserting, from the front end side, the tips of the GRIN lenses protruded from the jig ferrule into the plurality of first holes of the optical connector ferrule; a fourth step of making the tips of the GRIN lenses abut against tips of the waveguide members respectively, and also making the tips of the GRIN lenses abut against a portion where a diameter is reduced from the first hole to the second hole; a fifth step of respectively bending the waveguide members on the rear end side of the optical connector ferrule and the GRIN lenses on the rear end side of the jig ferrule; a sixth step of confirming bending of the waveguide members and bending of the GRIN lenses, and then fixing the waveguide members and the GRIN lenses to the optical connector ferrule; and a seventh step of polishing the front end.

According to this manufacturing method for the optical connector, it is possible to ensure that both the GRIN lens and the waveguide member are made to abut against each other properly by confirming that the GRIN lens and the waveguide member are bent. Therefore, the optical characteristics can be prevented from being deteriorated by clearance formed between the GRIN lens and the waveguide member. Therefore, manufacturing yield can be improved.

(13) In the above-described sixth step, a bending length of the GRIN lens may be shorter than a bending length of the waveguide member. When the bending length is short, buckling force (expanding force of the fiber) is large. Therefore, the GRIN lens withstands the buckling force of the optical fiber. As a result, it is possible to ensure that the tip of the GRIN lens properly abuts against the portion where the diameter is reduced from the first hole to the second hole. With this structure, an abutting position between the optical fiber and the GRIN lens can be controlled, thereby achieving to suppress variation of the length of the GRIN lens. Therefore, the optical connector having good optical characteristics can be easily manufactured.

### [Details of embodiments of the claimed invention]

Concrete examples of the optical connector according to the embodiments of the present invention will be described below with reference to the drawings. Note that the present invention is not limited to these examples and intended to include all modifications within meanings and a range recited in the scope of claims and equivalent thereto. In the following description, same elements are denoted by same reference signs in the description of the drawings, and repetition of the same description will be omitted.

### First Embodiment

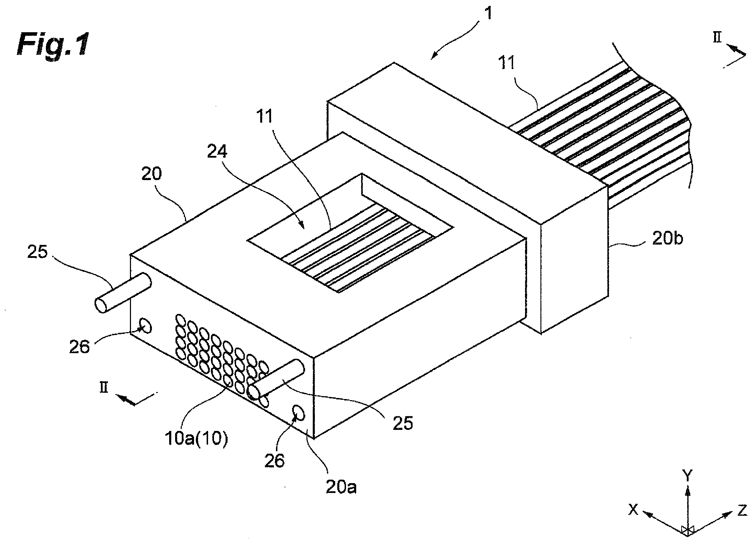

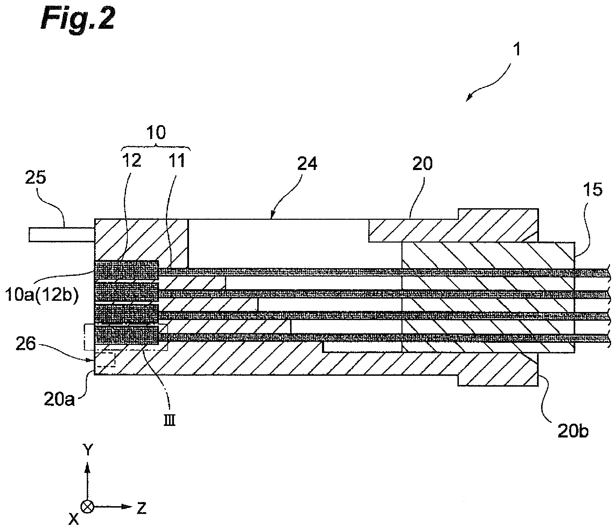

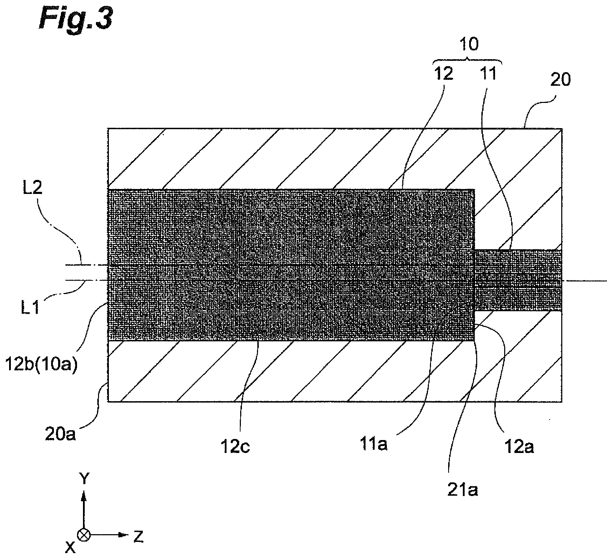

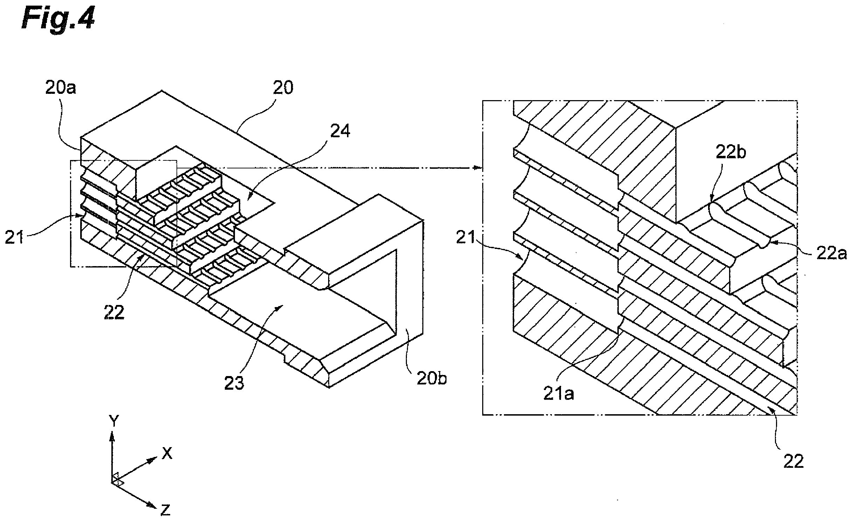

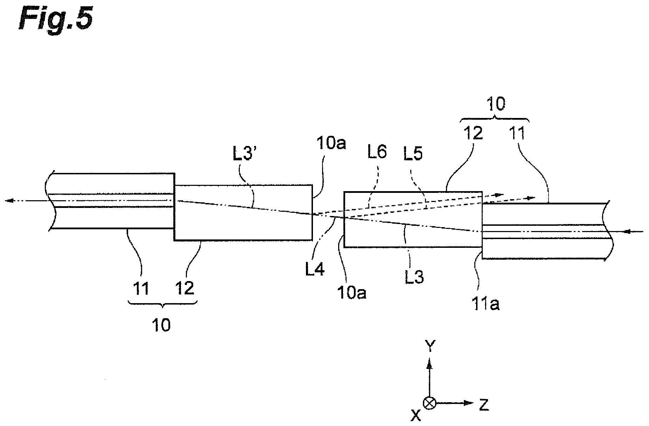

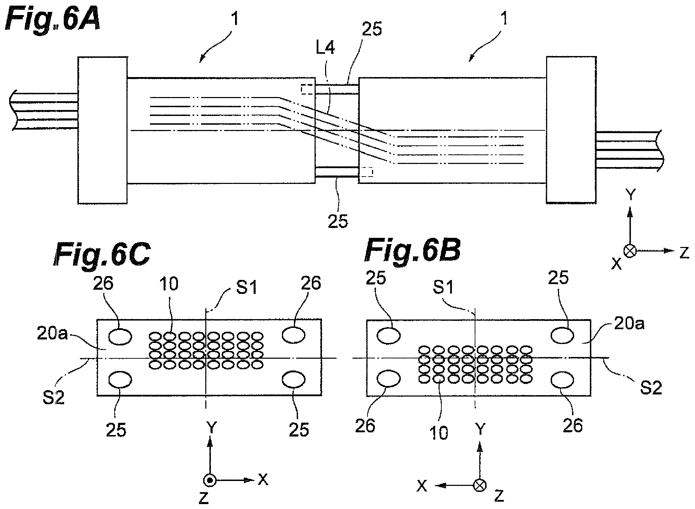

FIG 1 is a perspective view illustrating an optical connector according to a first embodiment of the present invention, and FIG 2 is a cross-sectional view of the optical connector taken along a II-II line in FIG. 1. FIG. 3 is an enlarged view of a portion III illustrated in FIG 2, and FIG 4 is a cross-sectional perspective view illustrating a ferrule taken along the line II-II in FIG 2 and also a partial enlarged cross-sectional perspective view thereof. FIG 5 is a diagram schematically illustrating a connection state (optical connection state) at a light incidence/emission portion according to the first embodiment, and FIGS. 6A to 6C are diagrams schematically illustrating connection states (optical connection states) of the optical connector according to the first embodiment of the present invention.

In the respective drawings, an XYZ orthogonal coordinate system is illustrated for convenience of explanation. An X axis extends in a longitudinal direction between a front end on an incidence/emission plane side and a rear end of the optical connector, and a Y axis extends in a short direction between the front end and the rear end of the optical connector. A Z axis extends in a direction from the front end to the rear end of the optical connector, namely, an extending direction of an optical fiber inside the optical connector, in other words, extends along an optical axis of the optical fiber.

As illustrated in FIGS. 1 and 2, an optical connector 1 according to the first embodiment includes 32 (8 × 4) light incidence/emission portions 10, and a ferrule 20 to house these light incidence/emission portions 10. The light incidence/emission portions 10 are two-dimensionally arrayed in an X direction and a Y-direction, and extend in a Z direction. More specifically, eight of the light incidence/emission portions 10 are arrayed in the X direction and four stages thereof are arrayed in the Y direction in the two-dimensional manner.

Each of the light incidence/emission portions 10 includes an optical fiber (waveguide member) 11 and a GRIN lens 12 as illustrated in FIGS. 2 and 3. The optical fiber 11 includes a concentric cylindrical core and a clad. As an example of the optical fiber 11, a single-mode optical fiber having a core diameter approximately 10 µm may be included. The optical fiber 11 includes a first optical axis L1 along the Z axis. A GRIN lens 12 is disposed on an incidence/emission plane 10a side of the light incidence/emission portion 10 relative to the optical fiber 11.

As an example of the GRIN lens 12, a Graded Index (GI) fiber may be included. The GRIN lens 12 has predetermined refractive index distribution in which the refractive index becomes gradually smaller from a center toward an outer periphery 12c. One end 12a of the GRIN lens 12 is connected to an end portion 11a of the optical fiber 11, and the other end 12b of the GRIN lens 12 is to be the incidence/emission plane 10a of the light incidence/emission portion 10.

The GRIN lens 12 includes a second optical axis L2 along the Z axis. More specifically, the optical axis L2 of the GRIN lens 12 is parallel to the optical axis L1 of the optical fiber 11. Further, the optical axis L2 of the GRIN lens 12 is offset in the Y direction relative to the optical axis L1 of the optical fiber 11 at the end portion 11a of the optical fiber 11. The detail of this offset amount will be described later.

The one end 12a and the other end 12b of the GRIN lens 12 are formed so as to be orthogonal to the optical axis L2. In other words, the incidence/emission plane 10a of the light incidence/emission portion 10 is orthogonal to an optical axis L2 of the GRIN lens 12. Further, as illustrated in FIG. 5, the incidence/emission plane 10a of the light incidence/emission portion 10 is not orthogonal to an optical axis of an optical beam L3 emitted from the incidence/emission plane 10a and an optical beam of the optical beam L3 entering the incidence/emission plane 10a.

Here, as illustrated in FIG. 5, the optical beam L3 emitted from a core of the optical fiber 11 of the light incidence/emission portion 10 on one side (right side of the drawing) is transmitted while being spread inside the GRIN lens 12, and then emitted from the incidence/emission plane 10a when both of the light incidence/emission portions 10 are made to face each other keeping a space therebetween. An emitted optical beam L4 is an optical beam collimated, and transmitted between the light incidence/emission portion 10 on one side and the light incidence/emission portion 10 on the other side (the other side on the left side of the drawing), and enters the incidence/emission plane 10a of the light incidence/emission portion 10 on the other side. The incident optical beam L3' is concentrated by the GRIN lens 12 and connected to the core of the optical fiber 11. Thus, the light incidence/emission portion 10 performs optical connection of the optical fiber 11 via a magnified beam.

Here, a refractive index difference exists between the GRIN lens 12 and air at the incidence/emission plane 10a, thereby generating a reflected return light L5 when the optical beam L3 is emitted from the incidence/emission plane 10a of the light incidence/emission portion 10 on one side. Further, when the optical beam L4 enters the incidence/emission plane 10a of the light incidence/emission portion 10 on the other side, a reflected return light L6 is generated.

According to the present embodiment, the optical axis L2 of the GRIN lens 12 is offset relative to the optical axis L1 of the optical fiber 11. Therefore, the optical beam L3 becomes not parallel to the optical axis L2. Further, since the incidence/emission plane 10a is orthogonal to the optical axis L2, the optical beam L3 is not orthogonal to the incidence/emission plane 10a. With this structure, the reflected return light L5 generated when the optical beam L3 is emitted from the incidence/emission plane 10a can be prevented from being connected to the core of the optical fiber 11. Further, since the optical beam L4 is not orthogonal to the incidence/emission plane 10a, the reflected return light L6 generated when the optical beam L4 is emitted to the incidence/emission plane 10a on the other side can be prevented from being connected to the core of the optical fiber 11.

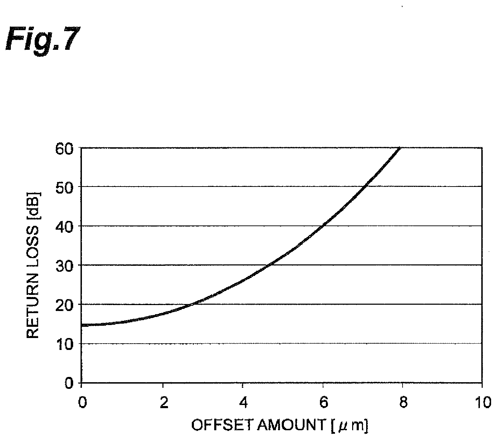

FIG. 7 is a diagram illustrating a relation of return loss relative to the offset amount between the optical axis L1 of the optical fiber 11 and the optical axis L2 of the GRIN lens 12. Note that it is indicated that the larger the return loss is, the less the amount of the reflected return light connected to the optical fiber 11 becomes. According to FIG. 7, it can be grasped that the larger the offset amount between the optical axis L1 of the optical fiber 11 and the optical axis L2 of the GRIN lens 12 is, the larger the return loss becomes.

Generally, in the case of an optical connector for a single-mode optical fiber, return loss is required to be 30 dB or more, preferably 40 dB or more, and more preferably 50 dB or more. By this, the offset amount of the optical axis L2 of the GRIN lens 12 relative to the optical axis L1 of the optical fiber 11 is to be 5 µm or more, preferably 6 µm or more, and more preferably 7 µm or more.

Meanwhile, according to the present embodiment, the GRIN lens 12 has an outer diameter larger than an outer diameter of the optical fiber 11, and an outer periphery of the optical fiber 11 is contained inside an outer periphery of the GRIN lens 12. Note that the outer diameter of the GRIN lens 12 may be substantially same as the outer diameter of the optical fiber 11.

Next, the ferrule 20 includes a front end 20a facing the optical connector on the other side, and a rear end 20b on an opposite side of the front end in the Z direction as illustrated in FIGS. 1 to 4. At the rear end 20b, an introducing hole 23 extending in the Z direction is opened in order to introduce a bundle of 32 optical fibers 11. On the other hand, at the front end 20a, 32 first holes 21 extending in the Z direction are opened in order to respectively house the 32 GRIN lenses 12. On the introducing hole 23 side of the 32 first holes 21, 32 second holes 22 extending in the Z direction are formed in order to respectively connect the first holes 21 to the introducing hole 23. The 32 second holes 22 respectively house the optical fibers 11 introduced from the introducing hole 23. The second hole 22 has a diameter smaller than the first hole 21, and there is a reduced diameter portion 21a between each of the first holes 21 and each of the second holes 22.

A center of the first hole 21 is offset in the Y direction relative to a center of the second hole 22. By this, when the GRIN lens 12 is fixed to the first hole 21 and the optical fiber 11 is fixed to the second hole 22, an offset structure can be easily obtained between the optical axis L1 of the optical fiber 11 and the optical axis L2 of the GRIN lens 12.

Further, between the second hole 22 and the introducing hole 23, an alignment groove 22a and a taper 22b are formed as a structure to facilitate insertion of the optical fiber 11 into the second hole 22.

Further, a window 24 is formed at the ferrule 20 in order that the optical fiber 11 can be fixed by bonding by charging an adhesive member. Additionally, as illustrated in FIG 2, the introducing hole 23 of the ferrule 20 may be provided with a support member 15 to support the 32 optical fibers 11.

Further, the ferrule 20 includes a guide portion to perform optical connection to the optical connector on the other side as illustrated in FIGS. 1, 2, and 6A to 6C. The guide portion includes two guide pins (first guide portions) 25 and two guide pin holes (second guide portions) 26 connectable to the guide pins 25. The two guide pins 25 are disposed symmetrically in a horizontal direction relative to a horizontal symmetric line (X-direction symmetric line) S1 on an upper side in the Y direction and on both side portions in the X direction of the front end 20a, and protrude in the Z direction On the other hand, the two guide pin holes (second guide portions) 26 are disposed symmetrically in the horizontal direction relative to the horizontal symmetric line S1 on a lower side in the Y direction and on both side portions in the X direction of the front end 20a, and are recessed in the Z direction. Further, the guide pin 25 and the guide pin hole 26 are disposed symmetrically in the vertical direction relative to a vertical symmetric line (Y-direction symmetric line) S2. By this, as illustrated in FIGS. 6A to 6C, the optical connectors can be connected to each other just by vertically inverting the optical connector on the other side (left side in the drawing) relative to the optical connector on one side (right side in the drawing).

Further, as illustrated in FIG. 6B, the 32 light incidence/emission portions 10 are disposed symmetrically in the horizontal direction relative to the horizontal symmetric line S1. On the other hand, the 32 light incidence/emission portions 10 are disposed asymmetrically in the vertical direction relative to the vertical symmetric line S2. More specifically, the 32 light incidence/emission portions 10 are disposed deviated toward the lower side in the Y-direction of the front end 20a. With this structure, the optical beams L4 emitted from the light incidence/emission portions 10 deviated toward the lower side in the Y direction of the optical connector 1 on one side, and transmitted obliquely upward in the Y direction through the spaced portion between the optical connector 1 on one side and the optical connector 1 on the other side can be connected to the light incidence/emission portions 10 deviated toward the upper side in the Y direction of the optical connector 1 on the other side.

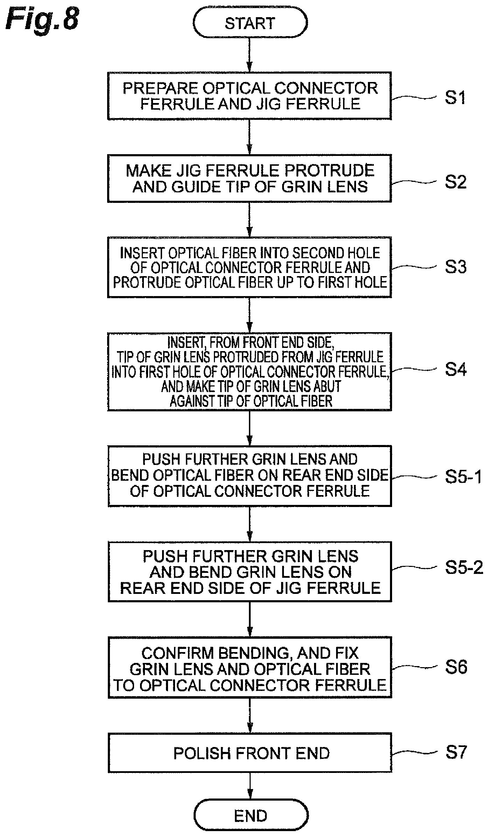

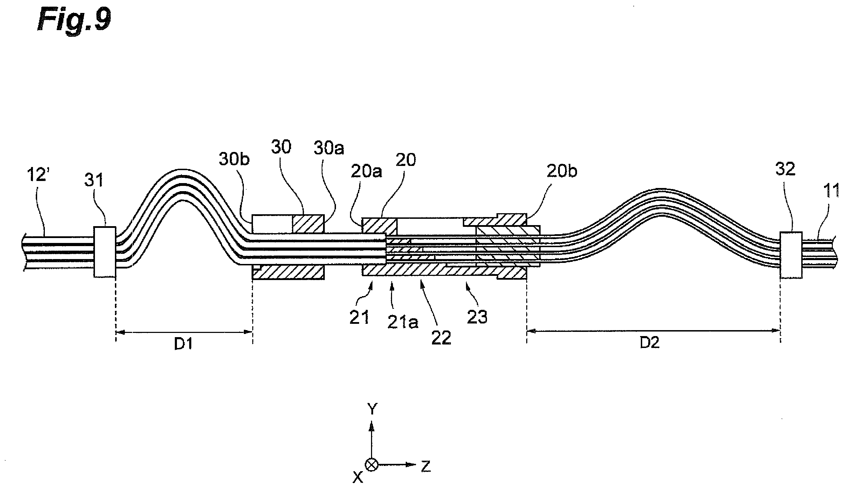

Next, a manufacturing method for the optical connector 1 will be described. FIG 8 is a flowchart illustrating the manufacturing method for the optical connector according to an embodiment of the present invention, and FIG 9 is a schematic view illustrating the manufacturing method for the optical connector illustrated in FIG. 8. The manufacturing method for the optical connector 1 includes seven steps.

First, the above-described optical connector ferrule 20 and a jig ferrule 30 are prepared. The jig ferrule 30 is used to temporarily fix a GI fiber 12' constituting the above-described GRIN lens 12 (first step S1).

Next, each of 32 GI fibers 12' is guided by the jig ferrule 30. At this point, a tip of the GI fiber 12' is protruded from a front end 30a of the jig ferrule 30. Further, the GI fiber 12' is fixed by a fixing portion 31 on a rear end 30b side of the jig ferrule 30. The GI fiber 12' is relatively movable in a front-rear direction relative to the jig ferrule 30 on a side (jig ferrule 30 side) more front than the fixing portion 31 (second step S2).

Next, each of the 32 optical fibers 11 is inserted into each of the 32 second holes 22 via the introducing hole 23 on the rear end 20b side of the optical connector ferrule 20. At this point, a part of the tip of each optical fiber 11 is protruded up to the first hole 21. Further, the optical fiber 11 is fixed by a fixing portion 32 on the rear end 20b side of the optical connector ferrule 20. The optical fiber 11 is relatively movable in the front-rear direction relative to the optical connector ferrule 20 on a side (optical connector ferrule 20 side) more front than the fixing portion 32 (third step S3). Note that a distance D1 between the fixing portion 31 and the rear end 30b of the jig ferrule 30 is shorter than a distance D2 between the fixing portion 32 and the optical connector ferrule 20.

Next, the tip of the GI fiber 12' protruded from the front end 30a of the jig ferrule 30 is inserted into each of the 32 first holes 21 of the optical connector ferrule 20 from the front end 20a side. At this point, each of the tips of the GI fibers 12' is made to abut against each of the tips of the optical fibers 11 protruded from the opposite side of the first holes 21, and each of the optical fibers 11 is pushed back while the each of the tips of the GI fibers 12' is made to abut against a portion 21a where the diameter is reduced from the first hole 21 to the second hole 22 (third step and fourth step S4).

Further, at this point, the optical fibers 11 are fixed by the fixing portion 32 on the rear end 20b side of the optical connector ferrule 20. Therefore, each of the optical fibers 11 is bent between the rear end 20b of the optical connector ferrule 20 and the fixing portion 32 by being pushed back by each of the GI fibers 12' (fifth step S5-1). By confirming bending thereof, it can be confirmed that the tip of the GI fiber 12' abuts against the tip of the optical fiber 11.

Next, each of the GI fibers 12' is further pushed and each of the GI fibers 12' is bent between the rear end 30b of the jig ferrule 30 and the fixing portion 31 (fifth step S5-2). By confirming bending thereof, it can be confirmed that the tip of the GI fiber 12' abuts against a reduced diameter portion 21a between the first hole 21 and the second hole 22.

Next, after confirming that the tip of the optical fiber 11 abuts against the tip of the GI fiber 12' and the tip of the GI fiber 12' abuts against the reduced diameter portion 21a, the optical fiber 11 and the GI fiber 12' are fixed to the optical connector ferrule 20 by bonding (sixth step S6).

Next, the optical connector 1 including the light incidence/emission portion 10 in which the GRIN lens 12 is connected to the tip of the optical fiber 11 can be achieved by cutting the GI fiber 12' and polishing the front end 20a of the optical connector ferrule 20 and a cut surface of the GI fiber 12' (seventh step S7).

Now, a description will be given for functions and effects obtained by the light incidence/emission portion 10, optical connector 1, and manufacturing method for the optical connector according to the first embodiment having the above-described structure.

According to the optical connector 1 of the first embodiment, the optical axis of the optical beam L3 entering the GRIN lens 12 from the optical fiber 11 can be made different from the optical axis L2 of the GRIN lens 12 by offsetting the optical axis L2 of the GRIN lens 12 relative to the optical axis L1 of the optical fiber (waveguide member) 11. By this, the optical axis of the optical beam L3 emitted from the incidence/emission plane 10a can be easily made not orthogonal to the incidence/emission plane 10a. Therefore, the light L5 reflected at the incidence/emission plane 10a can be suppressed from being connected to the core of the optical fiber 11, and deterioration of the optical characteristics caused by the reflected return light at the incidence/emission plane 10a can be reduced.

Further, according to this optical connector 1, when the optical beam L4 having the optical axis not orthogonal to the incidence/emission plane 10a enters the incidence/emission plane 10a, the optical beam L4 can be easily connected to the core of the optical fiber 11.

Moreover, according to the optical connector 1 of the first embodiment, the offset amount of the optical axis L2 of the GRIN lens 12 relative to the optical axis L1 of the optical fiber 11 is 5 µm or more. Therefore, in the case of single-mode transmission, return loss at the incidence/emission plane 10a can be sufficiently suppressed, and application to an optical connector for single-mode transmission becomes possible.

Furthermore, according to the optical connector 1 of the first embodiment, the outer diameter of the GRIN lens 12 is larger than the outer diameter of the optical fiber 11. Therefore, the optical beam emitted from the optical fiber 11 is hardly deviated from the GRIN lens 12 even when the optical axis L2 of the GRIN lens 12 is offset relative to the optical axis L1 of the optical fiber 11. Additionally, when the optical connector is assembled, the positions of the end surfaces of the optical fiber 11 and the GRIN lens 12 can be easily controlled by changing a size of the hole to house the optical fiber 11 and a size of the hole to house the GRIN lens 12. In other words, the length of the GRIN lens 12 can be easily controlled. Therefore, good optical characteristics can be obtained.

By controlling the length of the GRIN lens 12 at a desired value, the optical beam emitted from the core of the optical fiber 11 can be collimated and then emitted. Since a collimate state is varied by variation of the length of the GRIN lens, the optical beam cannot be properly concentrated to the core of the optical fiber at the optical connector on the other side, thereby deteriorating the optical characteristics (increasing connection loss). However, according to the present structure, a multi-core optical connector having good optical characteristics can be easily manufactured.

Further, according to the optical connector 1 of the first embodiment, the outer periphery of the optical fiber 11 is contained inside the outer periphery of the GRIN lens. Therefore, in the case of performing positioning by making the optical fiber 11 abut against the GRIN lens 12 after fixing the GRIN lens 12 to the ferrule 20, the end portion 11a of the optical fiber 11 can be made to sufficiently abut against the one end 12a of the GRIN lens 12. By this, the optical fiber 11 and the GRIN lens 12 can be suppressed from being damaged in an assembly process.

Moreover, according to the optical connector 1 of the first embodiment, the incidence/emission plane 10a is orthogonal to the optical axis L2 of the GRIN lens 12. Therefore, the other end 12b of the GRIN lens 12 and the front end 20a of the ferrule 20 are not needed to be processed diagonally. Furthermore, in the case of disposing the plurality of optical fibers 11 having multiple cores and multiple stages, the positions of the end surfaces of the respective optical fibers 11 and the positions of the end surfaces of the GRIN lens 12 can be easily aligned. Moreover, variation of the length of the GRIN lens 12 can be suppressed. Therefore, good optical characteristics can be obtained.

By the way, in the case of performing optical connection between the optical connectors, the optical beam is inclined to the connecting direction between the optical connectors. Therefore, the light incidence/emission portion of the optical connector on one side is needed to be offset relative to the light incidence/emission portion of the optical connector on the other side so as to conform to the inclination. According to the optical connector 1 of the first embodiment, offsetting the above-described light incidence/emission portion 10 can be achieved by asymmetrically disposing the plurality of light incidence/emission portions 10, and the optical beam having the optical axis not orthogonal to each of the incidence/emission planes 10a can be optically connected between a pair of the optical connectors 1. With this structure, the above-described light incidence/emission portion can be applied to a multi-core optical connector.

Further, according to the optical connector 1 of the first embodiment, the guide portion includes the guide pin 25 and the guide pin hole 26, and the optical connector can face the optical connector on the other side by being vertically inversed. Therefore, the optical connectors having the same shape are prepared and connected by vertically inverting one of the optical connectors relative to the other without preparing two kinds of a male connector and a female connector. With this structure, cost reduction can be achieved.

Additionally, according to the optical connector 1 of the first embodiment, the second hole to house the optical fiber 11 has a diameter smaller than the first hole to house the GRIN lens 12. Therefore, the position of the end surface of the GRIN lens 12 having the large diameter and the length of the GRIN lens 12 can be easily controlled by introducing the GRIN lens 12 from the front end side and by introducing the optical fiber 11 from the rear end side when the optical connector is assembled. Therefore, good optical characteristics can be obtained.

Further, according to the manufacturing method for the optical connector of the present embodiment, it is possible to ensure that both the GRIN lens 12 and the optical fiber 11 are made to properly abut against each other by confirming that the GRIN lens 12 and the optical fiber 11 are bent. The optical characteristics can be prevented from being deteriorated by clearance formed between the GRIN lens 12 and the optical fiber 11. Therefore, manufacturing yield can be improved.

Further, according to the manufacturing method for the optical connector of the present embodiment, a bending length of the GRIN lens 12 is made shorter than the bending length of the optical fiber 11. When the bending length is short, buckling force (expanding force of the fiber) is large. Therefore, when the tip of the GRIN lens 12 is pushed back after being abut against the optical fiber 11 protruded inside the first hole, GRIN lens 12 withstands buckling force of the optical fiber 11. Therefore, it can be said that when the GRIN lens 12 is bent is when the tip of the GRIN lens 12 properly abuts against the portion 21a where the diameter is reduced from the first hole 21 to the second hole 22. Therefore, it is possible to ensure that the tip of the GRIN lens 12 properly abuts against the portion 21 a where the diameter is reduced from the first hole 21 to the second hole 22. With this structure, an abutting position between the optical fiber 11 and the GRIN lens 12 can be controlled, thereby achieving to suppress variation of the length of the GRIN lens 12. Therefore, the optical connector having good optical characteristics can be easily manufactured.

### Second Embodiment

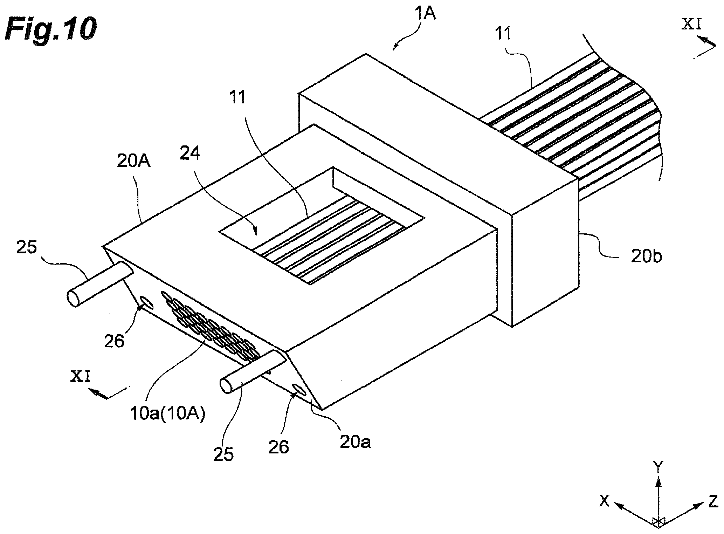

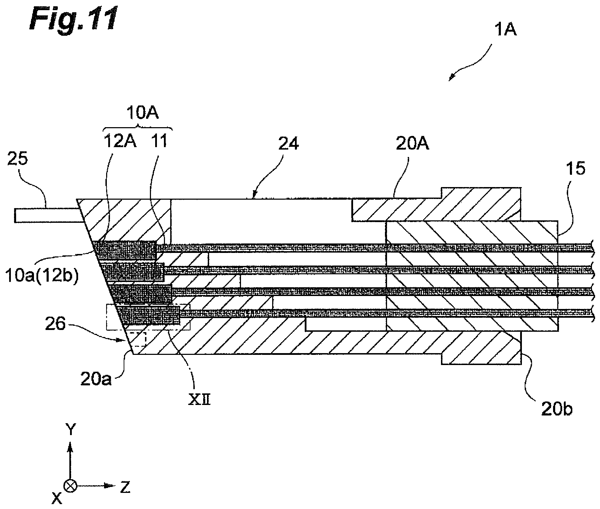

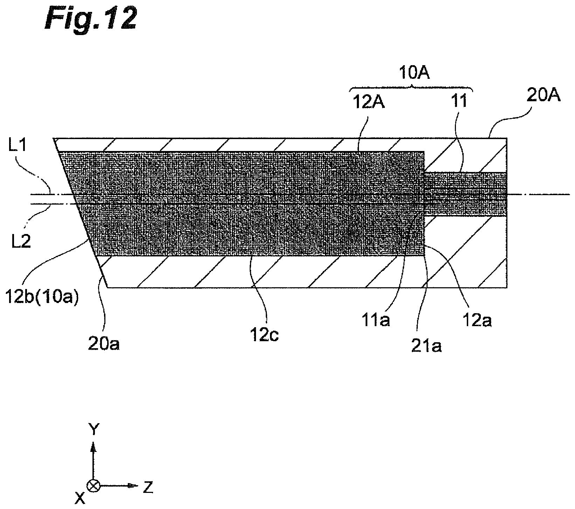

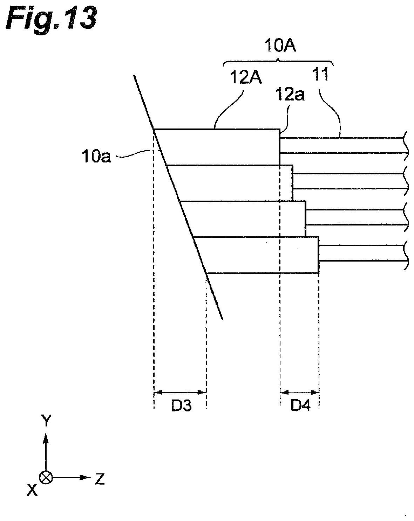

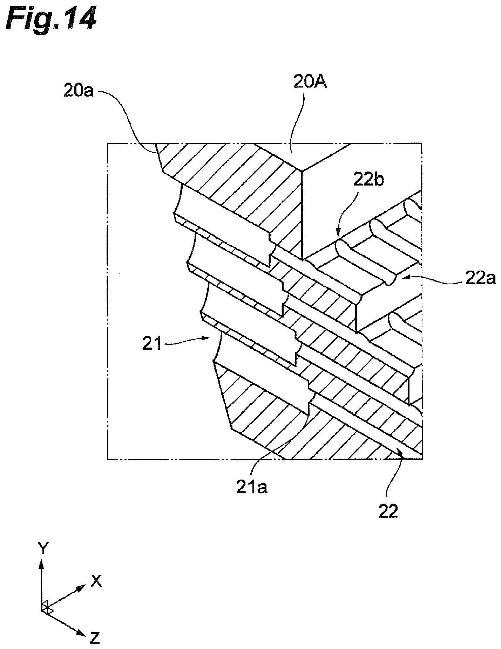

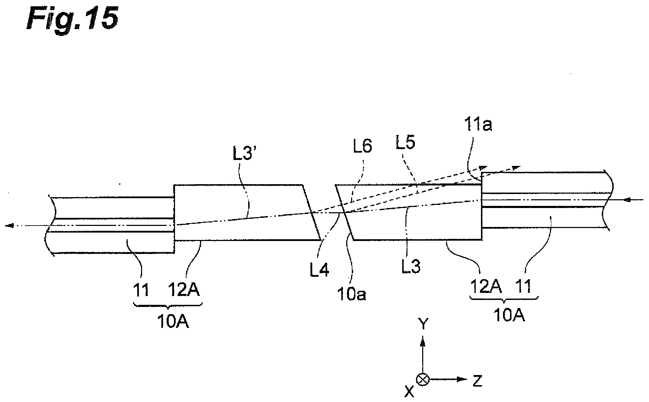

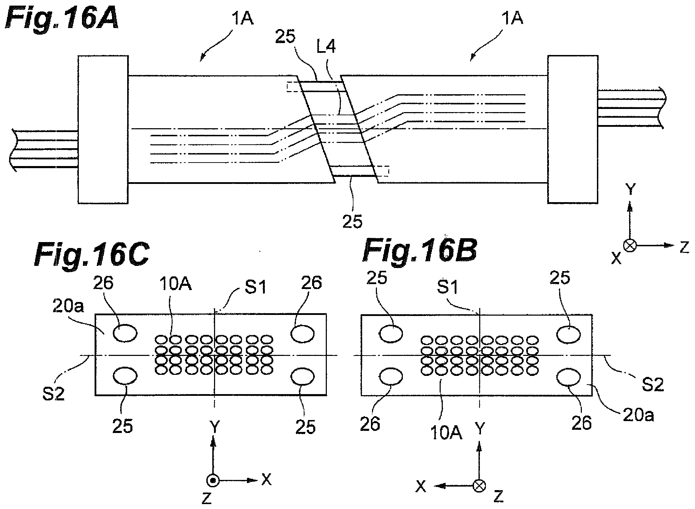

FIG. 10 is a perspective view illustrating an optical connector according to a second embodiment of the present invention, and FIG 11 is a cross-sectional view of the optical connector taken along a line XI-XI illustrated in FIG. 10. FIG. 12 is an enlarged view of a portion XII illustrated in FIG 11, and FIG. 13 is a partial enlarged cross-sectional view (schematic view) of a light incidence/emission portion taken along a line XI-XI in FIG 10. FIG 14 is a partial enlarged cross-sectional perspective view of a ferrule taken along the line XI-XI in FIG. 10. FIG. 15 is a diagram schematically illustrating a connection state (optical connection state) at a light incidence/emission portion according to the second embodiment, and FIGS. 16A to 16C are diagrams schematically illustrating the connection states (optical connection states) of the optical connector according to the second embodiment of the present invention.

As illustrated in FIGS. 10 and 11, an optical connector 1A of the second embodiment mainly differs from an optical connector 1 in that an incidence/emission plane is inclined in a Y direction. The optical connector 1A includes 32 (8 × 4 levels) light incidence/emission portions 10A and a ferrule 20A to house these light incidence/emission portions 10A.

As illustrated in FIGS. 11 to 13, each of the light incidence/emission portions 10A differs from a first embodiment in that a GRIN lens 12A is provided instead of a GRIN lens 12 in a light incidence/emission portion 10. The GRIN lens 12A differs from the GRIN lens 12 in that the other end 12b is inclined in the Y direction such that an optical beam L4 becomes parallel to a Z direction between the optically connected light incidence/emission portions 10A. In other words, an incidence/emission plane 10a of the light incidence/emission portion 10A is not orthogonal to an optical axis L2 of the GRIN lens 12A. Further, as illustrated in FIG. 15, the incidence/emission plane 10a of the light incidence/emission portion 10A is not orthogonal to an optical axis of an optical beam L3 emitted from the incidence/emission plane 10a and an optical axis of the optical beam L3 entering the incidence/emission plane 10a. Further, an optical axis of an optical beam L4 emitted from the incidence/emission plane 10a and an optical axis of the optical beam L4 entering the incidence/emission plane 10a are parallel to the optical axis L2 of the GRIN lens 12A.

In the present embodiment also, the optical beam L3 is not orthogonal to the incidence/emission plane 10a. Therefore, a reflected return light L5 generated when the optical beam L3 is emitted from the incidence/emission plane 10a can be prevented from being connected to a core of an optical fiber 11. Further, since the optical beam L4 is not orthogonal to the incidence/emission plane 10a, a reflected return light L6 generated when the optical beam L4 is emitted to the incidence/emission plane 10a on the other side can be prevented from being connected to the core of the optical fiber 11.

Further, as illustrated in FIG. 13, a position to fix one end 12a of each of the GRIN lenses 12A is made different such that a length in the Z direction of each of the GRIN lenses 12A arranged in the Y direction becomes not different. By this, a difference of incidence/emission plane position D3 caused by inclination of the incidence/emission plane 10a can be canceled by a difference of fixing position D4 of one end 12a of the GRIN lens 12A.

Meanwhile, according to the first embodiment, an optical axis L2 of the GRIN lens 12 is offset upward in the Y direction relative to an optical axis L1 of the optical fiber 11 at an end portion 11a of the optical fiber 11, but according to the present embodiment, an optical axis L2 of the GRIN lens 12A is offset downward in the Y direction relative to the optical axis L1 of the optical fiber 11 at the end portion 11a of the optical fiber 11. Further, the incidence/emission plane is inclined in the Y direction such that the incidence/emission plane is protruded in a direction opposite to an offset direction of the optical axis L2 of the GRIN lens 12A relative to the optical axis L1 of the optical fiber 11.

Next, as illustrated in FIGS. 10 to 14, the ferrule 20A differs from a ferrule 20 in that a front end 20a is inclined in the Y direction, conforming to an inclination angle of the incidence/emission plane 10a. Further, a position of a reduced diameter portion 21a between a first hole 21 and a second hole 22, which are located at different positions in the Y direction, is deviated in the Z direction, conforming to the inclination angle of the incidence/emission plane 10a. By this, a structure mounted with the light incidence/emission portion 10A illustrated in FIG 13 can be easily obtained.

The inclination of the front end 20a can be formed in a polishing process in a seventh step of a manufacturing method for an optical connector described above, for example. More specifically, after the GRIN lens and the optical fiber are set on an optical connector ferrule having the front end 20a not inclined in the Y direction, the front end 20a and the incidence/emission plane 10a may be polished. Note that a position of the reduced diameter portion 21a of the optical connector ferrule may be preliminarily determined in accordance with a designed inclination value for polishing processing.

Further, as illustrated in FIG 16B, the second embodiment differs from the first embodiment in that the 32 light incidence/emission portions 10 are disposed symmetrically in a horizontal direction relative to a horizontal symmetric line S1, and also symmetrically in a vertical direction relative to a vertical symmetric line S2.

According to the optical connector 1A of the second embodiment, advantages same as the optical connector 1 of the first embodiment can be also obtained.

According to the optical connector 1A of the second embodiment, the optical axis of the optical beam L4 emitted from the incidence/emission plane 10a and the optical axis of the optical beam L4 entering the incidence/emission plane 10a are parallel to the optical axis L2 of the GRIN lens 12. Therefore, optical connection can be easily performed just by making these optical connectors face each other without offsetting in the case of application to an optical connector. Therefore, an easy-to-use light incidence/emission portions can be obtained.

With this structure, the optical beam is a collimate beam and transmitted parallel to the optical axis direction in a spaced portion between the light incidence/emission portions 10A optically connected. Therefore, deterioration of the optical characteristics is reduced even when the space between the light incidence/emission portions 10A is changed. Therefore, since positioning of a space between the incidence/emission planes is not needed to be performed with highly accuracy in the case of forming the optical connector, cost reduction for the optical connector can be achieved.

Further, according to the optical connector 1A of the second embodiment, offset of the optical axis and inclination of the end surface are combined, and deterioration of the optical characteristics caused by the reflected return light at the incidence/emission plane 10a can be sufficiently reduced even when an inclination amount of the end surface is small. Therefore, good optical characteristics can be obtained.

By the way, in the case of performing optical connection between the optical connectors, the optical beam becomes parallel to a connecting direction between the optical connectors. Therefore, the light incidence/emission portion of the optical connector on one side is not needed to be offset relative to the light incidence/emission portion of the optical connector on the other side. According to the optical connector 1A of the second embodiment, optical connection of an optical beam having an optical axis not orthogonal to each of the incidence/emission planes 10a can be easily performed between a pair of the optical connectors by symmetrically disposing the plurality of light incidence/emission portions 10A. In other words, as described above, optical connection can be easily performed just by making these optical connectors face each other without offsetting. With this structure, the above-described light incidence/emission portion can be applied to a multi-core optical connector.

### Third Embodiment

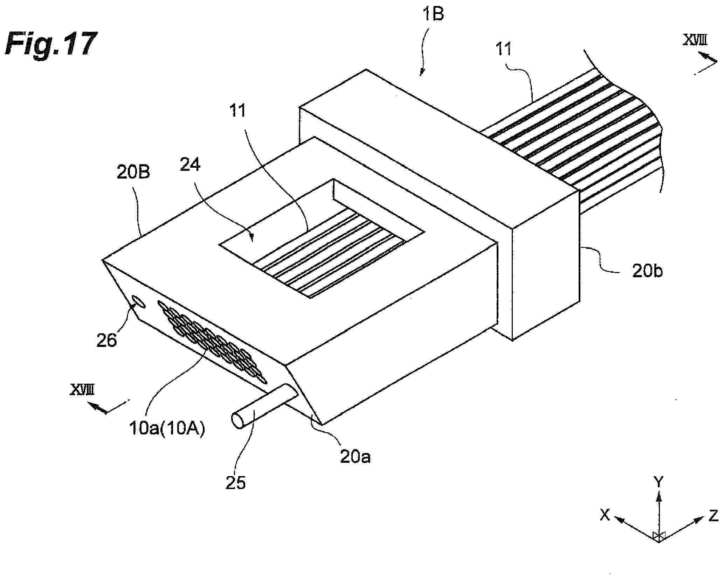

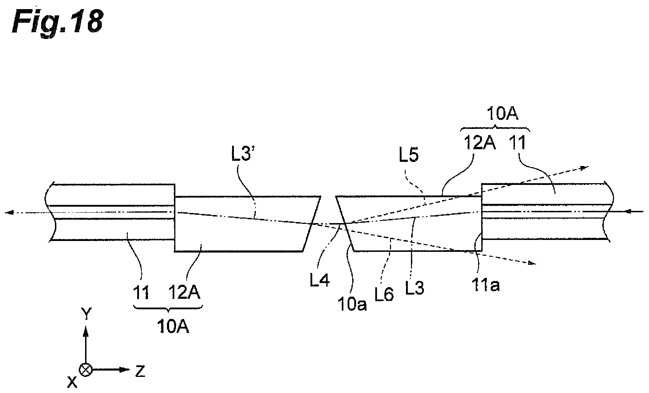

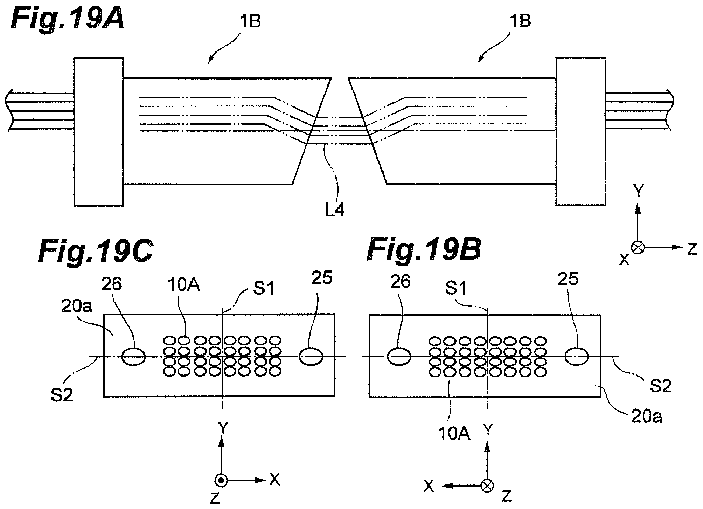

FIG. 17 is a perspective view illustrating an optical connector according to a third embodiment of the present invention. FIG. 18 is a diagram schematically illustrating a connection state (optical connection state) of a light incidence/emission portion according to the third embodiment, and FIG. 19A to 19C are diagrams schematically illustrating the connection states (optical connection states) of the optical connector according to the third embodiment of the present invention.

As illustrated in FIG 17, an optical connector 1B according to the third embodiment is different in having a different guide portion structure in an optical connector 1A More specifically, the optical connector 1B differs from a second embodiment in that a ferrule 20B is provided instead of a ferrule 20A in the optical connector 1A. Other components of the optical connector 1B are same as the optical connector 1A.

The ferrule 20B differs from the ferrule 20A in including one in each of a guide pin 25 and a guide pin hole 26. Other components of the ferrule 20B are same as the ferrule 20A.

As illustrated in FIG 17 and FIG 19B, the guide pin 25 is disposed at a center portion in a Y direction on a right side in an X direction (on a vertical symmetric line S2) of a front end 20a, and the guide pin hole 26 is disposed at a center portion in the Y direction on a left side in the X direction (on the vertical symmetric line S2) of the front end 20a. The guide pin 25 and the guide pin hole 26 are disposed at positions symmetric in the vertical direction relative to a horizontal symmetric line (symmetric line in the X direction) S1. With this structure, as illustrated in FIGS. 19A to 19C, same optical connectors can be connected to each other without vertically inverting one of the optical connectors (right side in the drawing) relative to the other (left side in the drawing).

According to the optical connector 1B of the third embodiment also, advantages same as the optical connector 1A of the second embodiment can be obtained.

Meanwhile, according to the optical connector 1B of the third embodiment, the number of guide pins can be reduced and cost reduction for the optical connector can be achieved. Further, an optical beam L4 is transmitted parallel to an optical axis L2 of a GRIN lens 12 between the optical connectors 1B, thereby increasing freedom degree of the guide portion structure.

Note that the present invention is not limited to the above-described embodiments and various kinds of modifications can be made. According to the present embodiment, the optical axis of the GRIN lens is offset in the Y direction relative to the optical axis of the optical fiber, but the optical axis of the GRIN lens may be offset in the X direction relative to the optical axis of the optical fiber. In the case of thus modifying the first embodiment, an optical beam emitted from the incidence/emission plane of the light incidence/emission portion is inclined in the X direction for transmission. Therefore, the incidence/emission plane of the light incidence/emission portion may be disposed asymmetrically relative to the horizontal symmetric axis. Further, in the case of thus modifying the second and third embodiments, the incidence/emission plane may be inclined so as not to incline, in the X direction, the optical beam emitted from the incidence/emission plane of the light incidence/emission portion.

Further, according to the present embodiment, the GI fiber is inserted after the optical fiber is inserted into the ferrule in the manufacturing method for an optical connector, but the optical fiber may be inserted after the GI fiber is inserted. In this case, the GI fiber is made to abut against the reduced diameter portion and the GI fiber is bent, and then the optical fiber is introduced and made to abut against the tip of the GI fiber, and the optical fiber may be bent.

### Reference Signs List

- 1, 1A, 1B: optical connector
- 10, 10A: light incidence/emission portion
- 10a: incidence/emission plane
- 11: optical fiber (waveguide member)
- 11a: end portion of the optical fiber
- 12, 12A: GRIN lens (GI figer)
- 12a: one end of the GRIN lens
- 12b: other end of the GRIN lens
- 12c: outer periphery of the GRIN lens
- 15: support member
- 20, 20A, 20B: ferrule
- 20a: front end of the ferrule
- 20b: rear end of the ferrule
- 21: first hole
- 21a: reduced diameter portion
- 22: second hole
- 22a: alignment groove
- 22b: taper
- 23: introducing hole
- 24: window
- 25: guide pin (first guide portion, guide portion)
- 26: guide pin hole (second guide portion, guide portion)
- 30: jig ferrule
- 30a: front end of the jig ferrule
- 30b: rear end of the jig ferrule
- 31, 32: fixing portion
- L1: first optical axis
- L2: second optical axis

## Claims

1. An optical connector including a plurality of light incidence/emission portions (10, 10A) and a ferrule (20, 20A, 20B) to house the plurality of light incidence/emission portions (10, 10A), and configured to perform optical connection to an optical connector on the other side, each of the plurality of light incidence/emission portions (10, 10A) comprising:
a waveguide member (11) having a first optical axis (L1); and
a GRIN lens (12, 12A) including a second optical axis (L2), and having one end (12a) abutted against an end portion (11a) of the waveguide member (11) and the other end (12b) provided with an incidence/emission plane (10a), wherein
the second optical axis (L2) is offset in parallel relative to the first optical axis (L1) at the end portion (11a) of the waveguide member (11),
the incidence/emission plane (10a) is not orthogonal to an optical axis of an optical beam emitted from the incidence/emission plane (10a), and also not orthogonal to an optical axis of an optical beam entering the incidence/emission plane (10a), and
the ferrule (20, 20A, 20B) includes a guide portion (25, 26) to perform optical connection to the optical connector on the other side.

2. The optical connector according to claim 1, wherein the waveguide member (11) is a member configured to perform single-mode transmission, and an offset amount of the second optical axis (L2) relative to the first optical axis (L1) is 5 µm or more.

3. The optical connector according to claim 1 or 2, wherein an outer diameter of the GRIN lens (12, 12A) is larger than an outer diameter of the waveguide member (11).

4. The optical connector according to claim 3, wherein an outer periphery of the waveguide member (11) is contained inside an outer periphery of the GRIN lens (12, 12A).

5. The optical connector according to any one of claims 1 to 4, wherein the incidence/emission plane (10a) is orthogonal to the second optical axis (L2).

6. The optical connector according to claim 5, wherein
the guide portions (25, 26) are disposed symmetrically relative to a symmetric line, and
the plurality of the light incidence/emission portions (10, 10A) is disposed asymmetrically relative to the symmetric line such that optical connection of an optical beam having an optical axis not orthogonal to each of the incidence/emission planes (10a) is performed between the optical connector and the optical connector on the other side.

7. The optical connector according to claim 6, wherein
the optical connector on the other side has a structure same as the optical connector,
the guide portion (25, 26) includes a first guide portion (25) and a second guide portion (26) connectable to the first guide portion (25), and
when the optical connector is vertically inversed and faces the optical connector on the other side, the first guide portion (25) is connected to the second guide portion (26) of the optical connector on the other side, and the second guide portion (26) is connected to the first guide portion (25) of the optical connector on the other side.

8. The optical connector according to any one of claims 1 to 4, wherein
the incidence/emission plane (10a) is not orthogonal to the second optical axis (L2), and
the second optical axis (L2) is parallel to an optical axis of an optical beam emitted from the incidence/emission plane (10a) and also parallel to an optical axis of an optical beam entering the incidence/emission plane (10a).

9. The optical connector according to claim 8, wherein
the guide portions (25, 26) are disposed symmetrically relative to a symmetric line, and
the plurality of the light incidence/emission portions (10, 10A) is disposed symmetrically relative to the symmetric line such that optical connection of an optical beam having an optical axis not orthogonal to each of the incidence/emission planes (10a) is performed between the optical connector and the optical connector on the other side.

10. The optical connector according to claim 9, wherein
the guide portion (25, 26) includes a first guide portion (25) and a second guide portion (26) connectable to the first guide portion (25), and
when the optical connector faces the optical connector on the other side, the first guide portion (25) is connected to the second guide portion (26) of the optical connector on the other side, and the second guide portion (26) is connected to the first guide portion (25) of the optical connector on the other side.

11. The optical connector according to claim 3, wherein
the ferrule (20, 20A, 20B) includes a front end (20a) facing the optical connector on the other side, and a rear end (20b) on the opposite side of the front side,
an introducing hole (23) configured to introduce waveguide members (11) of the plurality of light incidence/emission portions (10, 10A) is opened at the rear end (20b),
a plurality of first holes (21) configured to respectively house GRIN lenses (12, 12A) of the plurality of light incidence/emission portions (10, 10A) is opened at the front end (20a), and
a plurality of second holes (22), each having a diameter smaller than a diameter of the first hole (21), is formed on the introducing hole (23) side of the plurality of first holes (21), configured to respectively connect the plurality of first holes (21) to the introducing hole (23), and configured to respectively house the waveguide members (11) introduced from the introducing hole (23).

12. A manufacturing method for an optical connector including a plurality of light incidence/emission portions (10, 10A) and a ferrule (20, 20A, 20B) to house the plurality of light incidence/emission portions (10, 10A), and configured to perform optical connection to an optical connector on the other side, the manufacturing method comprising:
a first step of preparing an optical connector ferrule (20, 20A, 20B) and a jig ferrule (30), in which
the optical connector ferrule (20, 20A, 20B) includes a front end (20a) facing the optical connector on the other side and a rear end (20b) on an opposite side of the front end (20a), has an introducing hole (23) opened at the rear end (20b) and configured to introduce waveguide members (11) of the plurality of light incidence/emission portions (10, 10A), has a plurality of first holes (21) opened at the front end (20a) and configured to respectively house GRIN lenses (12, 12A) of the plurality of light incidence/emission portions (10, 10A), and has a plurality of second holes (22) formed on the introducing hole (23) side of the plurality of first holes (21), each of the second holes (22) having a diameter smaller than a diameter of the first hole (21), configured to respectively connect the plurality of first holes (21) to the introducing hole (23), and configured to respectively house the waveguide members (11) introduced from the introducing hole (23), such that for each light incidence/emission portion the optical axis of the GRIN lens is offset in parallel relative to the optical axis of the waveguide member, and
the jig ferrule (30) configured to respectively guide GRIN lenses (12, 12A) into a plurality of first holes (21);
a second step of the jig ferrule (30) protruding and guiding tips of the GRIN lenses (12, 12A) reflectively;
a third step of respectively inserting the waveguide members (11) into the plurality of second holes (22) of the optical connector ferrule (20, 20A, 20B), and also respectively inserting, from the front end (20a) side, the tips of the GRIN lenses (12, 12A) protruded from the jig ferrule (30) into the plurality of first holes (21) of the optical connector ferrule (20, 20A, 20B);
a fourth step of making the tips of the GRIN lenses (12, 12A) abut against tips of the waveguide members (11) respectively, and also making the tips of the GRIN lenses (12, 12A) abut against a portion where a diameter is reduced from the first hole (21) to the second hole (22);
a fifth step of respectively bending the waveguide members (11) on the rear end (20b) side of the optical connector ferrule (20, 20A, 20B) and the GRIN lenses (12, 12A) on the rear end (20b) side of the jig ferrule (30);
a sixth step of confirming bending of the waveguide members (11) and bending of the GRIN lenses (12, 12A), and then fixing the waveguide members (11) and the GRIN lenses (12, 12A) to the optical connector ferrule (20, 20A, 20B); and
a seventh step of polishing the front end (20a);
a step of cutting the gradient index fiber before the step of polishing the front end (20a).

13. The manufacturing method for an optical connector according to claim 12, wherein a bending length of the GRIN lens (12, 12A) is shorter than a bending length of the waveguide member (11) in the sixth step.

## Patentansprüche

1. Optischer Verbinder, der eine Vielzahl von Lichteinfalls-/Emissionsabschnitten (10, 10A) beinhaltet, und eine Muffe (20, 20A, 20B) zur Aufnahme der Vielzahl von Lichteinfalls-/Emissionsabschnitten (10, 10A), und konfiguriert ist, eine optische Verbindung zu einem optischen Verbinder auf der anderen Seite durchzuführen, wobei jeder der Vielzahl von Lichteinfalls-/Emissionsabschnitten (10, 10A) umfasst:
ein Wellenleiterelement (11) mit einer ersten optischen Achse (L1); und
eine GRIN-Linse (12, 12A), die eine zweite optische Achse (L2) beinhaltet und ein Ende (12a) aufweist, das an einem Endabschnitt (11a) des Wellenleiterelements (11) anliegt, und wobei das andere Ende (12b) mit einer Einfalls-/Emissionsebene (10a) bereitgestellt wird, wobei
die zweite optische Achse (L2) parallel relativ zu der ersten optischen Achse (L1) an dem Endabschnitt (11a) des Wellenleiterelements (11) versetzt ist,
die Einfalls-/Emissionsebene (10a) nicht orthogonal zu einer optischen Achse eines optischen Strahls ist, der von der Einfalls-/Emissionsebene (10a) emittiert wird, und auch nicht orthogonal zu einer optischen Achse eines optischen Strahls, der in die Einfalls-/Emissionsebene (10a) eintritt, und
die Muffe (20, 20A, 20B) einen Führungsabschnitt (25, 26) beinhaltet, um eine optische Verbindung mit dem optischen Verbinder auf der anderen Seite durchzuführen.

2. Optischer Verbinder nach Anspruch 1, wobei das Wellenleiterelement (11) ein Element ist, das konfiguriert ist, Monomode-Übertragung durchzuführen und ein Versatzbetrag der zweiten optischen Achse (L2) relativ zu der ersten optischen Achse (L1) 5 µm oder mehr beträgt.

3. Optischer Verbinder nach Anspruch 1 oder 2, wobei ein Außendurchmesser der GRIN-Linse (12, 12A) größer ist als ein Außendurchmesser des Wellenleiterelements (11).

4. Optischer Verbinder nach Anspruch 3, wobei ein Außenumfang des Wellenleiterelements (11) innerhalb eines Außenumfangs der GRIN-Linse (12, 12A) enthalten ist.

5. Optischer Verbinder nach einem der Ansprüche 1 bis 4, wobei die Einfalls-/Ausfallsebene (10a) orthogonal zu der zweiten optischen Achse (L2) ist.

6. Optischer Verbinder nach Anspruch 5, wobei
die Führungsabschnitte (25, 26) symmetrisch relativ zu einer symmetrischen Linie angeordnet sind, und
die Vielzahl von Lichteinfalls-/Emissionsabschnitten (10, 10A) derart asymmetrisch relativ zu der symmetrischen Linie angeordnet sind, dass eine optische Verbindung eines optischen Strahls mit einer optischen Achse nicht orthogonal zu jeder der Einfalls-/Emissionsebenen (10a) zwischen dem optischen Verbinder und dem optischen Verbinder auf der anderen Seite durchgeführt wird.

7. Optischer Verbinder nach Anspruch 6, wobei
der optische Verbinder auf der anderen Seite eine gleiche Struktur aufweist wie der optische Verbinder,
der Führungsabschnitt (25, 26) einen ersten Führungsabschnitt (25) und einen zweiten Führungsabschnitt (26) beinhaltet, der mit dem ersten Führungsabschnitt (25) verbindbar ist, und
wenn der optische Verbinder vertikal umgekehrt ist und dem optischen Verbinder auf der anderen Seite zugewandt ist, der erste Führungsabschnitt (25) mit dem zweiten Führungsabschnitt (26) des optischen Verbinders auf der anderen Seite verbunden ist, und der zweite Führungsabschnitt (26) mit dem ersten Führungsabschnitt (25) des optischen Verbinders auf der anderen Seite verbunden ist.

8. Optischer Verbinder nach einem der Ansprüche 1 bis 4, wobei
die Einfalls-/Emissionsebene (10a) nicht orthogonal zu der zweiten optischen Achse (L2) ist, und
die zweite optische Achse (L2) parallel zu einer optischen Achse eines optischen Strahls ist, der aus der Einfalls-/Emissionsebene (10a) emittiert wird, und auch parallel zu einer optischen Achse eines optischen Strahls, der in die Einfalls-/Emissionsebene (10a) eintritt.

9. Optischer Verbinder nach Anspruch 8, wobei
die Führungsabschnitte (25, 26) symmetrisch relativ zu einer symmetrischen Linie angeordnet sind, und
die Vielzahl von Lichteinfalls-/Emissionsabschnitten (10, 10A) derart symmetrisch relativ zu der symmetrischen Linie angeordnet sind, dass eine optische Verbindung eines optischen Strahls mit einer optischen Achse nicht orthogonal zu jeder der Einfalls-/Emissionsebenen (10a) zwischen dem optischen Verbinder und dem optischen Verbinder auf der anderen Seite durchgeführt wird.

10. Optischer Verbinder nach Anspruch 9, wobei
der Führungsabschnitt (25, 26) einen ersten Führungsabschnitt (25) und einen zweiten Führungsabschnitt (26) aufweist, der mit dem ersten Führungsabschnitt (25) verbindbar ist, und
wenn der optische Verbinder dem optischen Verbinder auf der anderen Seite zugewandt ist, der erste Führungsabschnitt (25) mit dem zweiten Führungsabschnitt (26) des optischen Verbinders auf der anderen Seite verbunden ist, und der zweite Führungsabschnitt (26) mit dem ersten Führungsabschnitt (25) des optischen Verbinders auf der anderen Seite verbunden ist.

11. Optischer Verbinder nach Anspruch 3, wobei
die Muffe (20, 20A, 20B) ein vorderes Ende (20a) beinhaltet, das dem optischen Verbinder auf der anderen Seite zugewandt ist, und ein hinteres Ende (20b) auf der gegenüberliegenden Seite der vorderen Seite,
ein Einführungsloch (23), das konfiguriert ist, Wellenleiterelemente (11) der Vielzahl von Lichteinfalls-/Emissionsabschnitten (10, 10A) einzuführen, an dem hinteren Ende (20b) geöffnet ist,
eine Vielzahl von ersten Löchern (21), die konfiguriert sind, jeweils GRIN-Linsen (12, 12A) der Vielzahl von Lichteinfalls-/Emissionsabschnitten (10, 10A) aufzunehmen, an dem vorderen Ende (20a) geöffnet ist, und
eine Vielzahl von zweiten Löchern (22), die jeweils einen Durchmesser aufweisen, der kleiner ist als ein Durchmesser des ersten Lochs (21) an der Einführungsloch- (23) Seite der Vielzahl von ersten Löchern (21), die konfiguriert sind, jeweils die Vielzahl von ersten Löchern (21) mit dem Einführungsloch (23) zu verbinden, und konfiguriert, jeweils die Wellenleiterelemente (11), die aus dem Einführungsloch (23) eingeführt werden, aufzunehmen.

12. Herstellungsverfahren für einen optischen Verbinder, das eine Vielzahl von Lichteinfalls-/Emissionsabschnitten (10, 10A) beinhaltet, und eine Muffe (20, 20A, 20B) zur Aufnahme der Vielzahl von Lichteinfalls-/Emissionsabschnitten (10, 10A), und konfiguriert ist, eine optische Verbindung zu einem optischen Verbinder auf der anderen Seite durchzuführen, wobei das Herstellungsverfahren umfasst:
einen ersten Schritt des Vorbereitens einer optischen Verbindermuffe (20, 20A, 20B) und einer Spannmuffe (30), bei dem
die optische Verbindermuffe (20, 20A, 20B) ein vorderes Ende (20a) beinhaltet, das dem optischen Verbinder auf der anderen Seite zugewandt ist, und ein hinteres Ende (20b) auf einer gegenüberliegenden Seite des vorderen Endes (20a) ein Einführungsloch (23) aufweist, das an dem hinteren Ende (20b) geöffnet ist und konfiguriert ist, Wellenleiterelemente (11) der Vielzahl von Lichteinfalls-/Emissionsabschnitten (10, 10A) einzuführen, eine Vielzahl von ersten Löchern (21) aufweist, die an dem vorderen Ende (20a) geöffnet und konfiguriert sind, jeweils GRIN-Linsen (12, 12A) der Vielzahl von Lichteinfalls-/Emissionsabschnitten (10, 10A) aufzunehmen, und eine Vielzahl von zweiten Löchern (22) aufweist, die an der Einführungsloch- (23) Seite der Vielzahl von ersten Löchern (21) gebildet sind, wobei jedes der zweiten Löcher (22) einen Durchmesser aufweist, der kleiner ist als ein Durchmesser des ersten Lochs (21), konfiguriert, jeweils die Vielzahl von ersten Löchern (21) mit dem Einführungsloch (23) zu verbinden, und konfiguriert, jeweils die Wellenleiterelemente (11), die aus dem Einführungsloch (23) eingeführt werden, aufzunehmen, sodass für jeden Lichteinfalls-/Emissionsabschnitt die optische Achse der GRIN-Linse parallel relativ zu der optischen Achse des Wellenleiterelements versetzt ist, und
die Spannmuffe (30) konfiguriert ist, jeweils GRIN-Linsen (12, 12A) in eine Vielzahl von ersten Löchern (21) zu führen;
einen zweiten Schritt, bei dem die Spannmuffe (30) vorsteht und Spitzen der GRIN-Linsen (12, 12A) reflektierend führt;
einen dritten Schritt des jeweiligen Einsetzens der Wellenleiterelemente (11) in die Vielzahl von zweiten Löchern (22) der optischen Verbindermuffe (20, 20A, 20B) und auch jeweiliges Einsetzen, von der vorderen End- (20a) Seite, der Spitzen der GRIN-Linsen (12, 12A), die aus der Spannmuffe (30) hervorstehen, in die Vielzahl von ersten Löchern (21) der optischen Verbindermuffe (20, 20A, 20B);
einen vierten Schritt des Herstellens der Spitzen der GRIN-Linsen (12, 12A), jeweils an den Spitzen der Wellenleiterelemente (11) anliegend, und auch Herstellen der Spitzen der GRIN-Linsen (12, 12A), an einem Abschnitt anliegend, wo ein Durchmesser von dem ersten Loch (21) zu dem zweiten Loch (22) reduziert ist;
einen fünften Schritt des jeweiligen Biegens der Wellenleiterelemente (11) an der hinteren End- (20b) Seite der optischen Verbindermuffe (20, 20A, 20B) und der GRIN-Linsen (12, 12A) an der hinteren End- (20b) Seite der Spannmuffe (30);
einen sechsten Schritt des Bestätigens des Biegens der Wellenleiterelemente (11) und Biegen der GRIN-Linsen (12, 12A) und dann Fixieren der Wellenleiterelemente (11) und der GRIN-Linsen (12, 12A) an der optischen Verbindermuffe (20, 20A, 20B); und
einen siebten Schritt des Polierens des vorderen Endes (20a);
einen Schritt des Schneidens der Gradientenindexfaser vor dem Schritt des Polierens des vorderen Endes (20a).

13. Herstellungsverfahren für einen optischen Verbinder nach Anspruch 12, wobei eine Biegelänge der GRIN-Linse (12, 12A) kürzer ist als eine Biegelänge des Wellenleiterelements (11) in dem sechsten Schritt.

## Revendications

1. Connecteur optique incluant une pluralité de parties d'incidence/émission de lumière (10, 10A) et une virole (20, 20A, 20B) pour loger la pluralité de parties d'incidence/émission de lumière (10, 10A) et configuré pour effectuer une connexion optique avec un connecteur optique de l'autre côté, chacune de la pluralité de parties d'incidence/émission de lumière (10, 10A) comprenant :
un élément guide d'onde (11) ayant un premier axe optique (L1) ; et
une lentille GRIN (12, 12A) incluant un second axe optique (L2) et ayant une première extrémité (12a) aboutée contre une partie d'extrémité (11a) de l'élément guide d'onde (11) et l'autre extrémité (12b) pourvue d'un plan d'incidence/émission (10a), dans lequel :
le second axe optique (L2) est décalé en parallèle par rapport au premier axe optique (L1) dans la partie d'extrémité (11a) de l'élément guide d'onde (11),
le plan d'incidence/émission (10a) n'est pas orthogonal à un axe optique d'un faisceau optique émis par le plan d'incidence/émission (10a) ni orthogonal à un axe optique d'un faisceau optique pénétrant dans le plan d'incidence/émission (10a) et
la virole (20, 20A, 20B) inclut une partie de guidage (25, 26) pour effectuer une connexion optique avec le connecteur optique de l'autre côté.

2. Connecteur optique selon la revendication 1, dans lequel l'élément guide d'onde (11) est un élément configuré pour effectuer une transmission en mode unique et une quantité de décalage du second axe optique (L2) par rapport au premier axe optique (L1) est de 5 µm ou plus.

3. Connecteur optique selon la revendication 1 ou 2, dans lequel un diamètre externe de la lentille GRIN (12, 12A) est plus grand qu'un diamètre externe de l'élément guide d'onde (11).

4. Connecteur optique selon la revendication 3, dans lequel une périphérie externe de l'élément guide d'onde (11) est contenue à l'intérieur d'une périphérie externe de la lentille GRIN (12, 12A).

5. Connecteur optique selon l'une quelconque des revendications 1 à 4, dans lequel le plan d'incidence/émission (10a) est orthogonal au second axe optique (L2).

6. Connecteur optique selon la revendication 5, dans lequel :
les parties de guidage (25, 26) sont disposées symétriquement par rapport à une ligne de symétrie et
la pluralité des parties d'incidence/émission de lumière (10, 10A) est disposée de manière asymétrique par rapport à la ligne de symétrie de sorte qu'une connexion optique d'un faisceau optique ayant un axe optique non orthogonal à chacun des plans d'incidence/émission (10a) soit effectuée entre le connecteur optique et le connecteur optique de l'autre côté.

7. Connecteur optique selon la revendication 6, dans lequel :
le connecteur optique de l'autre côté a une structure identique à celle du connecteur optique ;
la partie de guidage (25, 26) inclut une première partie de guidage (25) et une seconde partie de guidage (26) qui peut être raccordée à la première partie de guidage (25) et,
lorsque le connecteur optique est inversé verticalement et est en regard du connecteur optique de l'autre côté, la première partie de guidage (25) est connectée à la seconde partie de guidage (26) du connecteur optique de l'autre côté et la seconde partie de guidage (26) est connectée à la première partie de guidage (25) du connecteur optique de l'autre côté.

8. Connecteur optique selon l'une quelconque des revendications 1 à 4, dans lequel :
le plan d'incidence/émission (10a) n'est pas orthogonal au second axe optique (L2) et
le second axe optique (L2) est parallèle à un axe optique d'un faisceau optique émis par le plan d'incidence/émission (10a) et également parallèle à un axe optique d'un faisceau optique pénétrant dans le plan d'incidence/émission (10a).

9. Connecteur optique selon la revendication 8, dans lequel :
les parties de guidage (25, 26) sont disposées symétriquement par rapport à une ligne de symétrie et
la pluralité des parties d'incidence/émission de lumière (10, 10A) est disposée symétriquement par rapport à la ligne de symétrie de sorte qu'une connexion optique d'un faisceau optique ayant un axe optique non orthogonal à chacun des plans d'incidence/émission (10a) soit effectuée entre le connecteur optique et le connecteur optique de l'autre côté.

10. Connecteur optique selon la revendication 9, dans lequel :
la partie de guidage (25, 26) inclut une première partie de guidage (25) et une seconde partie de guidage (26) qui peut être raccordée à la première partie de guidage (25) et,
lorsque le connecteur optique est en regard du connecteur optique de l'autre côté, la première partie de guidage (25) est raccordée à la seconde partie de guidage (26) du connecteur optique de l'autre côté et la seconde partie de guidage (26) est raccordée à la première partie de guidage (25) du connecteur optique de l'autre côté.

11. Connecteur optique selon la revendication 3, dans lequel :
la virole (20, 20A, 20B) inclut une extrémité avant (20a) en regard du connecteur optique de l'autre côté et une extrémité arrière (20b) sur le côté opposé au côté avant,
un trou d'introduction (23) configuré pour introduire des éléments guides d'onde (11) de la pluralité de parties d'incidence/émission de lumière (10, 10A) est ouvert à l'extrémité arrière (20b),
une pluralité de premiers trous (21) configurés pour loger respectivement des lentilles GRIN (12, 12A) de la pluralité de parties d'incidence/émission de lumière (10, 10A) est ouverte à l'extrémité avant (20a) et
une pluralité de seconds trous (22), chacun ayant un diamètre plus petit qu'un diamètre du premier trou (21), est formée du côté du trou d'introduction (23) de la pluralité de premiers trous (21), configurée pour raccorder respectivement la pluralité de premiers trous (21) au trou d'introduction (23) et configurée pour loger respectivement les éléments guides d'onde (11) introduits par le trou d'introduction (23).

12. Procédé de fabrication pour un connecteur optique incluant une pluralité de parties d'incidence/émission de lumière (10, 10A) et une virole (20, 20A, 20B) pour loger la pluralité de parties d'incidence/émission de lumière (10, 10A) et configurée pour effectuer une connexion optique avec un connecteur optique de l'autre côté, le procédé de fabrication comprenant :
une première étape de préparation d'une virole de connecteur optique (20, 20A, 20B) et d'une virole de guidage (30), dans lequel :
la virole de connecteur optique (20, 20A, 20B) inclut une extrémité avant (20a) en regard du connecteur optique de l'autre côté et une extrémité arrière (20b) d'un côté opposé de l'extrémité avant (20a), a un trou d'introduction (23) ouvert à l'extrémité arrière (20b) et configuré pour introduire des éléments guides d'onde (11) de la pluralité de parties d'incidence/émission de lumière (10, 10A), a une pluralité de premiers trous (21) ouverts à l'extrémité avant (20a) et configurés pour loger respectivement des lentilles GRIN (12, 12A) de la pluralité de parties d'incidence/émission de lumière (10, 10A) et a une pluralité de seconds trous (22) formés du côté du trou d'introduction (23) de la pluralité de premiers trous (21), chacun des seconds trous (22) ayant un diamètre plus petit qu'un diamètre du premier trou (21), configurés pour raccorder respectivement la pluralité de premiers trous (21) au trou d'introduction (23) et configurés pour loger respectivement les éléments guides d'onde (11) introduits par le trou d'introduction (23), en sorte que, pour chaque partie d'incidence/émission de lumière, l'axe optique de la lentille GRIN soit décalée en parallèle par rapport à l'axe optique de l'élément guide d'onde et que la virole de guidage (30) soit configurée pour guider respectivement les lentilles GRIN (12, 12A) dans une pluralité de premiers trous (21) ;
une deuxième étape où la virole de guidage (30) fait saillir et guide les pointes des lentilles GRIN (12, 12A) par réflexion ;
une troisième étape d'insertion respective des éléments guides d'onde (11) dans la pluralité de seconds trous (22) de la virole de connecteur optique (20, 20A, 20B) et également d'insertion de manière respective, par le côté d'extrémité avant (20a), des pointes des lentilles GRIN (12, 12A) saillant de la virole de guidage (30) dans la pluralité de premiers trous (21) de la virole de connecteur optique (20, 20A, 20B) ;
une quatrième étape pour faire en sorte que les pointes des lentilles GRIN (12, 12A) s'aboutent contre les pointes des éléments guides d'onde (11) respectivement et également pour faire en sorte que les pointes des lentilles GRIN (12, 12a) s'aboutent contre une partie où le diamètre est réduit du premier trou (21) au second trou (22) ;
une cinquième étape de courbure respective des éléments guides d'onde (11) du côté de l'extrémité arrière (20b) de la virole de connecteur optique (20, 20A, 20B) et des lentilles GRIN (12, 12A) du côté de l'extrémité arrière (20b) de la virole de guidage (30) ;
une sixième étape de confirmation de la courbure des éléments guides d'onde (11) et de la courbure des lentilles GRIN (12, 12A), puis de la fixation des éléments guides d'onde (11) et des lentilles GRIN (12, 12A) à la virole de connecteur optique (20, 20A, 20B) ; et
une septième étape de polissage de l'extrémité avant (20a) ;
une étape de coupe de la fibre à gradient d'index avant l'étape de polissage de l'extrémité avant (20a).

13. Procédé de fabrication pour un connecteur optique selon la revendication 12, dans lequel une longueur de courbure de la lentille GRIN (12, 12A) est plus courte qu'une longueur de courbure de l'élément guide d'onde (11) dans la sixième étape.
